(19) Europäisches Patentamt
European Patent Office
Office européen des brevets

(11) **EP 4 310 452 B1**

(12) **EUROPEAN PATENT SPECIFICATION**

(45) Date of publication and mention
of the grant of the patent:
**29.10.2025 Bulletin 2025/44**

(21) Application number: **22770933.4**

(22) Date of filing: **04.02.2022**

(51) International Patent Classification (IPC):
**G01C 21/34** *(2006.01)*    **G01C 21/36** *(2006.01)*
**B60L 58/13** *(2019.01)*    **B60L 58/12** *(2019.01)*

(52) Cooperative Patent Classification (CPC):
**G01C 21/3469; B60L 58/12; B60L 58/13;
G01C 21/3461; G01C 21/3691;** B60L 2240/622;
B60L 2240/662; B60L 2260/52

(86) International application number:
**PCT/JP2022/004536**

(87) International publication number:
**WO 2022/196173 (22.09.2022 Gazette 2022/38)**

(54) **GUIDANCE SYSTEM, GUIDANCE METHOD, AND GUIDANCE PROGRAM**

FÜHRUNGSSYSTEM, FÜHRUNGSVERFAHREN UND FÜHRUNGSPROGRAMM

SYSTÈME DE GUIDAGE, PROCÉDÉ DE GUIDAGE ET PROGRAMME DE GUIDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2021 JP 2021046072**

(43) Date of publication of application:
**24.01.2024 Bulletin 2024/04**

(73) Proprietor: **Panasonic Intellectual Property
Management Co., Ltd.
Osaka-shi, Osaka 540-6207 (JP)**

(72) Inventors:
• **HASHIMOTO Makoto**
**Kadoma-shi, Osaka 571-0057 (JP)**
• **MATSUDA Shigeru**
**Kadoma-shi, Osaka 571-0057 (JP)**

(74) Representative: **Novagraaf International SA
Chemin de l'Echo 3
1213 Onex, Geneva (CH)**

(56) References cited:
WO-A1-2012/098660     JP-A- 2019 168 326
KR-A- 20130 033 546     KR-A- 20130 033 546
US-A1- 2015 226 567     US-A1- 2020 166 356

## Description

TECHNICAL FIELD

The present disclosure relates to a guidance system, a guidance method, and a guidance program for guiding a travel route of an electric vehicle.

BACKGROUND ART

In recent years, electric vehicles (EV) and plug-in hybrid vehicles (PHV) have become widespread. These electric vehicles are equipped with a secondary battery as a key device. The secondary battery has a property of decreasing the capacity when being in a low temperature state. In particular, in a lithium iron phosphate ion (LFP) battery, capacity reduction in the low temperature state becomes large. For example, cases have also been reported in which the capacity decreases to about 60% to 70% at 0 °C and 40% to 55% at - 10 °C. In addition, the charging speed also decreases in the low temperature state.

PTL 1 related to the present disclosure proposes use of weather information on a travel route for prediction of a range. In addition, a method of notifying a user of the predicted range is also proposed. As a specific example, it is disclosed that intermediate charging is recommended in a case where weather is predicted to be bad.

PTL 2 related to the present disclosure proposes a navigation device that estimates electric cost of an auxiliary machine such as air conditioning using weather information on a route, calculates required electric power and required time from the electric cost of the auxiliary machine and the electric cost of a vehicle, and guides SOC (State Of Charge) at the time of arrival at a destination and an arrival time. In addition, in a case where there are a plurality of route candidates, it is disclosed that the route candidates are listed from the one with a shorter distance.

PTL3 discloses a system for setting up a driving route for an electric vehicle, whereby a low temperature zone is excluded from the route in order to prevent the battery from becoming discharged before reaching the destination.

Citation List

Patent Literatures

PTL 1: US Patent No. 10859391
PTL 2: Unexamined Japanese Patent Publication No. 2019-168326
PTL3 : Korean Patent Application No. KR 2013 0033546 A

SUMMARY OF THE INVENTION

In a case where an electric vehicle is used as a delivery vehicle, an increase in an electricity shortage risk due to a low temperature and an increase in a charging time lead to an increase in delivery time and delayed delivery.

The present disclosure has been made in view of such a situation, and an object of the present disclosure is to provide a guidance system, a guidance method, and a guidance program for achieving efficient operation of an electric vehicle while avoiding electricity shortage.

In order to solve the above problem, a guidance system according to claim 1, a guidance method according to claim 8, and a computer-readable medium according to claim 9 are provided.

According to the present disclosure, it is possible to achieve efficient operation of an electric vehicle while avoiding electricity shortage.

BRIEF DESCRIPTION OF THE DRAWINGS

Fig. 1 is a diagram illustrating a schematic configuration of an electric vehicle according to the exemplary embodiment.
Fig. 2 is an explanatory diagram of a guidance system according to the exemplary embodiment.
Fig. 3 is a diagram illustrating a configuration example of the guidance system according to the exemplary embodiment.
Fig. 4 is a diagram schematically illustrating three travel routes from a current location to a destination, the routes having been found by searching on a map information server.

Fig. 5A is a diagram illustrating an example of a table for scoring the number of passes through a low temperature area.

Fig. 5B is a diagram illustrating an example of a table for scoring the predicted SOC of the battery pack at the time of arrival at the destination.

Fig. 5C is a diagram illustrating an example of a table for scoring the distance to the destination.

Fig. 6 is a diagram illustrating an example of a route and temperature map for obtaining the number of passes through the low temperature area.

Fig. 7 is a diagram illustrating a priority determination table for a normal route, different route 1, and different route 2 illustrated in Fig. 4.

Fig. 8 is a diagram illustrating an example of a route guidance screen displayed on a display of the electric vehicle.

Fig. 9 is a diagram illustrating an example of a setting screen of priority items displayed on the display of the electric vehicle.

Fig. 10 is a flowchart illustrating an example of route guidance information generation processing by the guidance system according to the exemplary embodiment.

Fig. 11 is a diagram illustrating an example of charging stands installed on different route 1 determined by a user.

Fig. 12 is a diagram illustrating an example of a priority determination table for charging stands A, B, and C.

DESCRIPTION OF EMBODIMENT

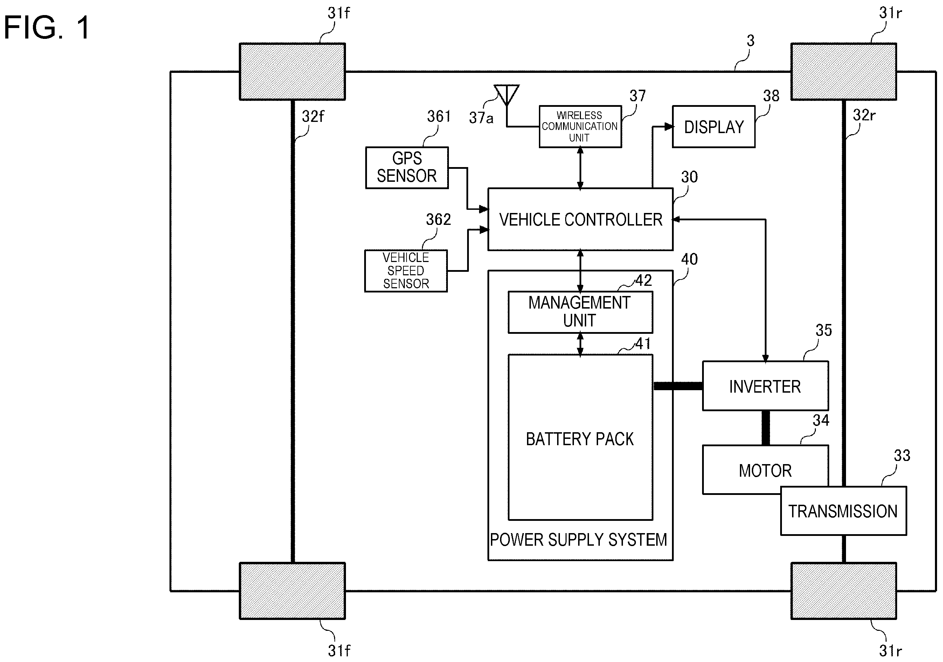

Fig. 1 is a diagram illustrating a schematic configuration of electric vehicle 3 according to the exemplary embodiment. In the present exemplary embodiment, a pure EV on which an internal-combustion engine is not mounted is assumed as electric vehicle 3. Electric vehicle 3 illustrated in Fig. 1 is a rear-wheel drive (2WD) EV including a pair of front wheels 31f, a pair of rear wheels 31r, and motor 34 as a power source. The pair of front wheels 31f is coupled by front wheel axle 32f, and the pair of rear wheels 31r is coupled by rear wheel axle 32r. Transmission 33 transmits rotation of motor 34 to rear wheel axle 32r at a predetermined conversion ratio. Note that electric vehicle 3 may be a front-wheel drive (2WD) or 4WD.

Power supply system 40 includes battery pack 41 and management unit 42, and battery pack 41 includes a plurality of cells. Lithium ion battery cells or nickel metal hydride battery cells can be used as the cell. Hereinafter, the present description assumes an example of use of lithium ion battery cells (nominal voltage: 3.6 V to 3.7 V). Management unit 42 monitors voltages, currents, temperatures, SOCs, and state of health (SOH) of the plurality of cells included in battery pack 41, and transmits the voltages, currents, temperatures, SOCs, and SOHs to vehicle controller 30 via an in-vehicle network. For example, a controller area network (CAN) or a local interconnect network (LIN) can be used as the in-vehicle network.

In the EV, a three-phase AC motor is generally used as motor 34 for driving. Inverter 35 converts DC power supplied from battery pack 41 into AC power, and supplies it to motor 34 at the time of power running. At the time of regeneration, AC power supplied from motor 34 is converted into DC power to be supplied to battery pack 41. At the time of power running, motor 34 rotates in accordance with AC power supplied from inverter 35. At the time of regeneration, rotational energy due to deceleration is converted into AC power and supplied to inverter 35.

Vehicle controller 30 is a vehicle electronic control unit (ECU) that controls entire electric vehicle 3, and may be configured by, for example, an integrated vehicle control module (VCM).

GPS sensor 361 detects positional information on electric vehicle 3 and transmits the detected positional information to vehicle controller 30. Specifically, GPS sensor 361 receives, from a plurality of GPS satellites, radio waves including their respective transmission times, and calculates the latitude and longitude of the received point based on the plurality of transmission times included in the plurality of respective received radio waves.

Vehicle speed sensor 362 generates a pulse signal proportional to the rotation speed of front wheel axle 32f or rear wheel axle 32r, and transmits the generated pulse signal to vehicle controller 30. Vehicle controller 30 detects the speed of electric vehicle 3 based on the pulse signal received from vehicle speed sensor 362.

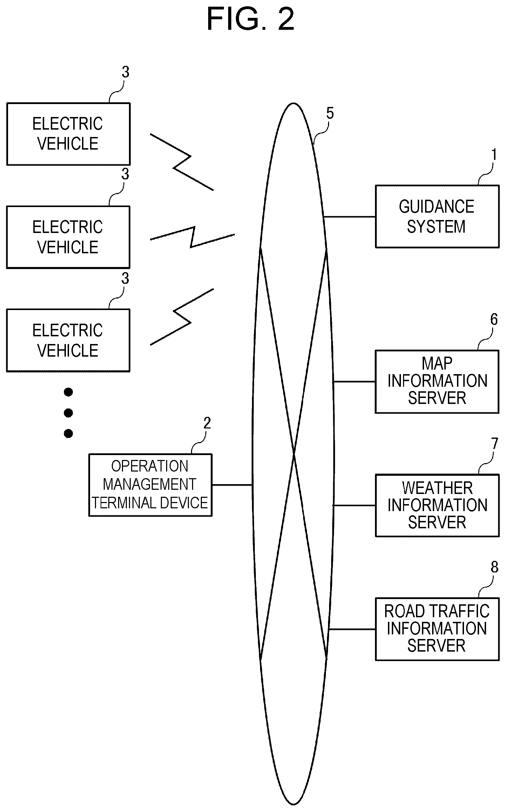

Wireless communication unit 37 performs signal processing for wirelessly connecting to network 5 (refer to Fig. 2) via antenna 37a. Examples of a wireless communication network to which electric vehicle 3 is wirelessly connectable include a mobile phone network (cellular network), a wireless LAN, vehicle-to-infrastructure (V2I), vehicle-to-vehicle (V2V), an electronic toll collection system (ETC), and dedicated short range communications (DSRC).

Display 38 is a display that can display characters and images, and a liquid crystal display, an organic EL display, a mini LED display, and the like can be used. Display 38 may be a display converted from such as a car navigation system, a display audio, or a drive recorder, or may be a display installed in an instrument panel. The display used for display 38 may have a touch panel function. In the present exemplary embodiment, route guidance and charging guidance to be described later are displayed on display 38.

While electric vehicle 3 is traveling, vehicle controller 30 can transmit travel data from wireless communication unit 37 to guidance system 1 (refer to Fig. 2) via network 5 in real time. The travel data includes positional data (latitude and longitude) of electric vehicle 3, a vehicle speed of electric vehicle 3, voltages, currents, temperatures, SOCs, and SOHs of the plurality of cells included in battery pack 41. Vehicle controller 30 samples these data periodically (for example, an interval of 10 seconds) and transmits the data to guidance system 1 each time.

Note that vehicle controller 30 may accumulate the travel data of electric vehicle 3 in an internal memory and collectively transmit the travel data accumulated in the memory at a predetermined timing. For example, vehicle controller 30 may collectively transmit the travel data accumulated in the memory to operation management terminal device 2 (refer to Fig. 2) installed in a base of a delivery company after the end of business in one day. Operation management terminal device 2 transmits the travel data of a plurality of electric vehicles 3 to guidance system 1 at a predetermined timing.

Fig. 2 is an explanatory diagram of guidance system 1 according to the exemplary embodiment. Guidance system 1 according to the exemplary embodiment is a system used by at least one delivery company. For example, guidance system 1 may be constructed on an own server of a service providing entity providing a route guidance service for electric vehicle 3, the own server being installed in an own facility of the service providing entity or in a data center. In addition, guidance system 1 may be constructed on a cloud server used based on a cloud service. In addition, guidance system 1 may be constructed on a plurality of servers installed in a distributed manner in a plurality of bases (data center, own facility). The plurality of servers may be a combination of a plurality of the own servers, a combination of a plurality of the cloud servers, or a combination of the own servers and the cloud servers.

The delivery company has the plurality of electric vehicles 3 and has a delivery base for parking electric vehicles 3. Operation management terminal device 2 is installed at the delivery base. Operation management terminal device 2 includes, for example, a PC. Operation management terminal device 2 is used to manage the plurality of electric vehicles 3 belonging to the delivery base. An operation manager of the delivery company can create an operation plan of the plurality of electric vehicles 3 using operation management terminal device 2.

Operation management terminal device 2 can access guidance system 1 via network 5. Operation management terminal device 2 can acquire guidance information on a travel route from guidance system 1 by inputting a current location and a destination to guidance system 1.

Network 5 is a general term for communication paths such as the Internet, a dedicated line, and a virtual private network (VPN), and a communication medium and a protocol thereof are not limited. As the communication media, for example, a mobile phone network (cellular network), a wireless local area network (LAN), a wired LAN, an optical fiber network, an ADSL network, a CATV network, or the like can be used. As the communication protocols, for example, the transmission control protocol (TCP)/internet protocol (IP), the user datagram protocol (UDP)/IP, Ethernet (registered trademark), or the like can be used.

The operation manager of the delivery company can contact a driver in electric vehicle 3 via network 5 (for example, IP radio), business radio, specified low power radio, and the like. The operation manager can transmit the guidance information on the travel route acquired from guidance system 1 to the driver.

In a state where electric vehicle 3 is parked at the delivery base, vehicle controller 30 and operation management terminal device 2 can exchange data via network 5 (for example, a wireless LAN), a CAN cable, and the like. Even while electric vehicle 3 is traveling, vehicle controller 30 and operation management terminal device 2 may be configured to be able to exchange data via network 5.

Various information servers such as map information server 6, weather information server 7, and road traffic information server 8 are connected to network 5, and guidance system 1, operation management terminal device 2, and vehicle controller 30 of electric vehicle 3 can acquire data from the various information servers.

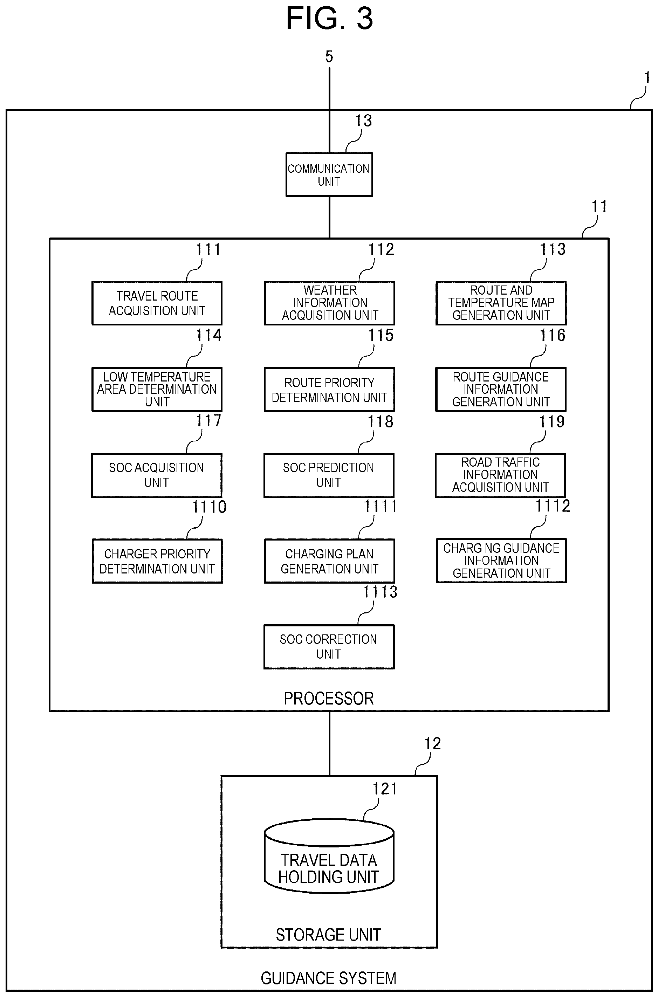

Fig. 3 is a diagram illustrating a configuration example of guidance system 1 according to the exemplary embodiment. Guidance system 1 includes processor 11, storage unit 12, and communication unit 13. Communication unit 13 is a communication interface for connection to network 5 with a wire or wirelessly.

Processor 11 includes travel route acquisition unit 111, weather information acquisition unit 112, route and temperature map generation unit 113, low temperature area determination unit 114, route priority determination unit 115, route guidance information generation unit 116, SOC acquisition unit 117, SOC prediction unit 118, road traffic information acquisition unit 119, charger priority determination unit 1110, charging plan generation unit 1111, charging guidance information generation unit 1112, and SOC correction unit 1113.

The function of processor 11 can be achieved by cooperation of a hardware resource and a software resource, or by the hardware resource alone. The hardware resource may include a central processing unit (CPU), a read only memory (ROM), a random access memory (RAM), a graphics processing unit (GPU), an application specific integrated circuit (ASIC), a field programmable gate array (FPGA), and other large-scale integrated (LSI) circuits. The software resource may be a program, such as an operating system (OS) or an application.

Storage unit 12 includes travel data holding unit 121. Storage unit 12 includes a nonvolatile recording medium such as an HDD or an SSD, and stores various data.

Travel route acquisition unit 111 acquires, via network 5, the current location and the destination input to vehicle controller 30 by the driver, or the current location and the destination input to operation management terminal device 2 by the operation manager. Travel route acquisition unit 111 transmits the acquired current location and the destination to map information server 6 via network 5.

A route search application operating on map information server 6 searches for an optimal travel route from the acquired current location to the destination. At that time, the route search application searches for the travel route to reach the destination in the shortest distance or the shortest time without considering the fuel of the vehicle (the remaining capacity of battery pack 41 in the case of electric vehicle 3). Map information server 6 transmits the travel route that has been found by the searching to guidance system 1. Travel route acquisition unit 111 of guidance system 1 acquires the travel route from map information server 6.

Weather information acquisition unit 112 acquires weather information on the travel route acquired by travel route acquisition unit 111 from weather information server 7. Specifically, weather information acquisition unit 112 acquires a predicted temperature at a predicted passing through time of at least one waypoint on the travel route and a predicted temperature at a predicted arrival time at the destination. The waypoints may be set at regular distance intervals (for example, an interval of 50 km) on the travel route. In addition, the waypoint may be set to an installation location of the charging stand.

In that case, it is desirable to select such that the distance between two adjacent charging stands is as constant as possible.

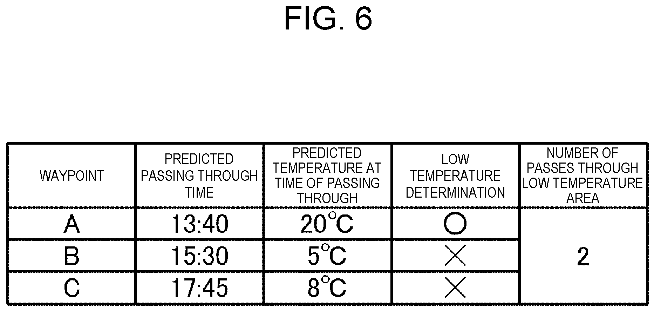

Route and temperature map generation unit 113 generates a route and temperature map (refer to, for example, Fig. 6) based on the travel route acquired by travel route acquisition unit 111 and the weather information on the travel route acquired by weather information acquisition unit 112.

Low temperature area determination unit 114 determines whether a low temperature area is present on the travel route. For example, when there is a waypoint whose predicted temperature at the predicted passing through time is lower than 10 °C, low temperature area determination unit 114 determines that there is a low temperature area on the travel route.

When low temperature area determination unit 114 determines that there is the low temperature area, travel route acquisition unit 111 transmits a search request for a travel route other than a first acquired travel route (hereinafter, the first acquired travel route is referred to as a normal route) to map information server 6, and acquires a different travel route (hereinafter referred to as a different route) from map information server 6. The number of different routes to be acquired may be one or more.

Weather information acquisition unit 112 acquires weather information on the different route acquired by travel route acquisition unit 111 from weather information server 7. Route and temperature map generation unit 113 generates the route and temperature map based on different route acquired by travel route acquisition unit 111 and weather information on the different route acquired by weather information acquisition unit 112.

Route priority determination unit 115 determines priorities of a plurality of travel routes including the normal route and different route. For example, for each of the plurality of travel routes, route priority determination unit 115 determines the priorities of the plurality of travel routes based on the number of passes through the low temperature area, the predicted SOC of battery pack 41 at the time of arrival at the destination, and the distance to the destination.

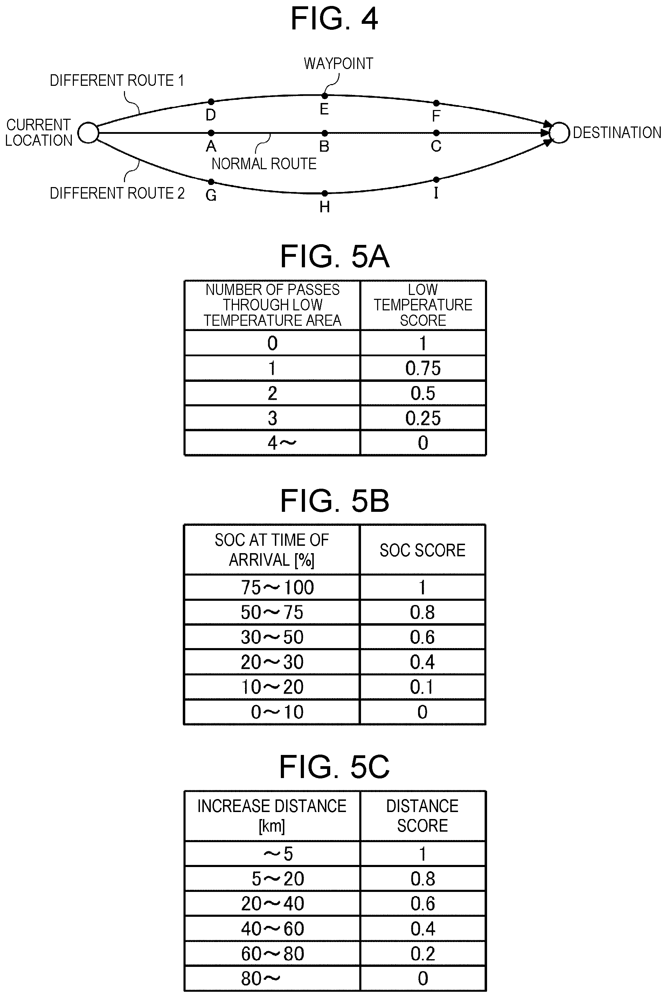

Fig. 4 is a diagram schematically illustrating three travel routes from the current location to the destination, the routes having been found by searching on map information server 6. The normal route passes through waypoints A, B, and C, different route 1 passes through waypoints D, E, and F, and different route 2 passes through waypoints G, H, and I.

For example, for each of the plurality of travel routes, route priority determination unit 115 scores the number of passes through the low temperature area, the predicted SOC of battery pack 41 at the time of arrival at the destination, and the distance to the destination, and calculates the priority of each travel route by weighted averaging the plurality of scores.

Figs. 5A to 5C are diagrams illustrating examples of the tables for scoring the number of passes through the low temperature area, the predicted SOC of battery pack 41 at the time of arrival at the destination, and the distance to the destination. The score of each item is normalized to a range of 0 to 1. As for the number of passes through the low temperature area, a score closer to 1 is assigned as the number of passes through is smaller.

Fig. 6 is a diagram illustrating an example of the route and temperature map for obtaining the number of passes through the low temperature area. The route and temperature map illustrated in Fig. 6 illustrates a route and temperature map of the normal route illustrated in Fig. 4. Similarly, a route and temperature map are generated for different route 1 and different route 2.

Instead of the table, the number of passes through the low temperature area may be scored by a function as described in (Equation 1) below.

$$y = -0.25x + 1 \bullet\bullet\bullet(\text{Equation 1})$$

where, x represents the number of passes through the low temperature area, and y represents a low temperature score (note that the minimum value of y is clipped at 0). As for the predicted SOC at the time of arrival at the destination, a score closer to 1 is assigned as the predicted SOC at the time of arrival at the destination is higher. SOC acquisition unit 117 acquires a current SOC of battery pack 41 from vehicle controller 30 of electric vehicle 3 via network 5. When the travel data including the SOC of battery pack 41 is periodically transmitted from vehicle controller 30 of electric vehicle 3, the SOC included in the travel data may be used.

SOC prediction unit 118 predicts the SOC at the time of arrival at the destination based on the current SOC thus acquired, the distance from the current location to the destination, and the electric cost of electric vehicle 3 that has been acquired. Note that SOC prediction unit 118 may correct the electric cost of electric vehicle 3 based on the predicted average temperature in the traveling on each travel route.

The distance to the destination is assigned a score closer to 1 as the increase distance with respect to the normal route is smaller. The predicted SOC at the time of arrival at the destination and the distance to the destination may also be scored by functions. Note that, in Fig. 5C, it is assumed that the distance score is set to 1 in a case where the increase distance is negative (in a case where the distance is shorter in the different route). However, for example, the distance score in a case where the increase distance is 0 to 5 may be set to 0.9, and the distance score in a case where the increase distance is a negative value may be set to 1.

Route priority determination unit 115 generates a priority determination table based on the route and temperature map of each travel route, the predicted SOC at the time of arrival at the destination, and the increase distance with respect to the normal route.

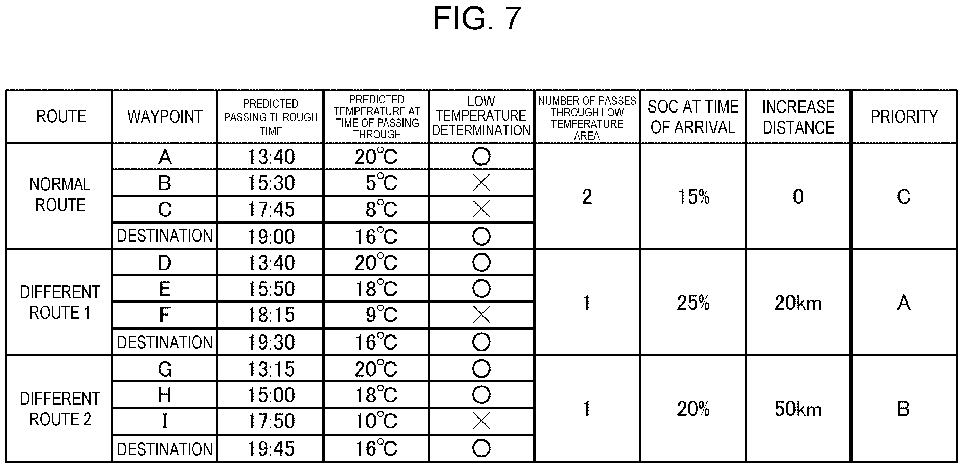

Fig. 7 is a diagram illustrating a priority determination table for the normal route, different route 1, and different route 2 illustrated in Fig. 4. With reference to Fig. 5A to 5C, route priority determination unit 115 calculates the low temperature score, the SOC score, and the distance score of each travel route, and calculates the priority of each travel route based on (Equation 2) below.

$$\text{Priority} = \text{low temperature score} \times a + \text{SOC score} \times b + \text{distance score} \times c$$

$$\cdots(\text{Equation 2})$$

Here, a, b, and c each represent the contribution degree of a respective one of the scores, and a + b + c = 1. Since each score is normalized to a range of 0 to 1, the priority is also calculated with a value in a range of 0 to 1.

For example, when a = 0.5, b = 0.3, and c = 0.2 are set, the priority of the normal route is 0.48 (= 0.5 × a + 0.1 × b + 1 × c), the priority of different route 1 is 0.655 (= 0.75 × a + 0.4 × b + 0.8 × c), and the priority of different route 2 is 0.49 (= 0.75 × a + 0.1 × b + 0.4 × c). Therefore, the priority increases in the order of different route 1, different route 2, and the normal route. That is, the closer the value is to 1, the higher the priority.

Route guidance information generation unit 116 generates route guidance information based on the priorities of the plurality of travel routes determined by route priority determination unit 115. Route guidance information generation unit 116 notifies vehicle controller 30 of electric vehicle 3 of the generated route guidance information via network 5. Vehicle controller 30 of electric vehicle 3 causes display 38 to display the route guidance information acquired from guidance system 1.

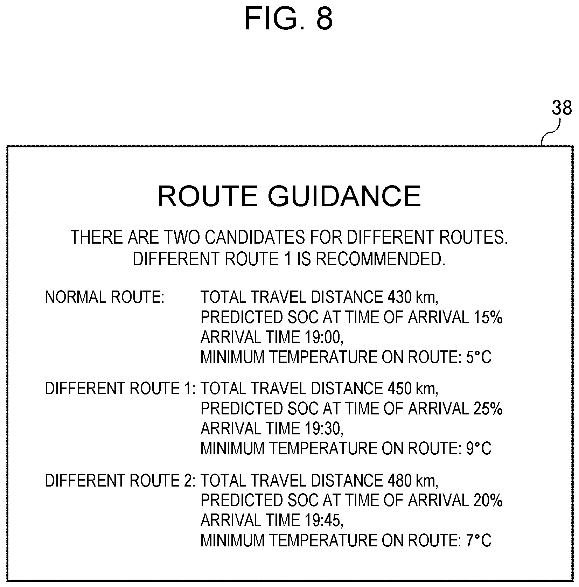

Fig. 8 is a diagram illustrating an example of a route guidance screen displayed on display 38 of electric vehicle 3.

Note that the route guidance text may be converted into a voice by a voice synthesis application in vehicle controller 30, and the voice may be output from a speaker (not illustrated).

Note that the route guidance information generated by route guidance information generation unit 116 may be notified to operation management terminal device 2 via network 5. In this case, the route guidance information is transmitted from the operation manager to the driver of electric vehicle 3.

The contribution degrees of a, b, and c of the low temperature score, the SOC score, and the distance score described above may be designed to be changeable by the user (driver or operation manager). Route priority determination unit 115 acquires the change information input by the user from vehicle controller 30 of electric vehicle 3 or operation management terminal device 2 via network 5.

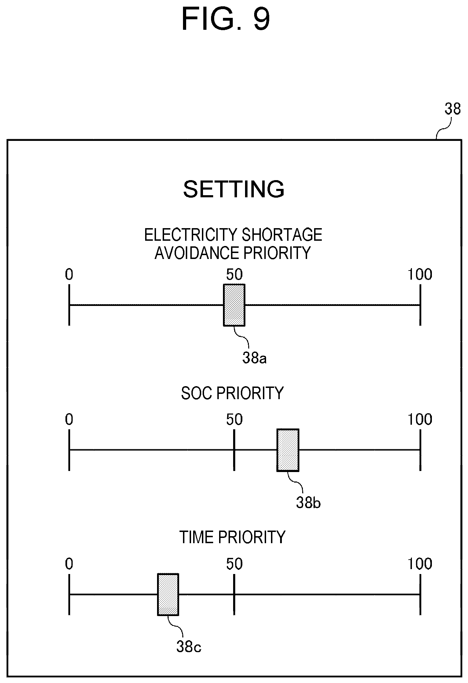

Fig. 9 is a diagram illustrating an example of a setting screen of priority items displayed on display 38 of electric vehicle 3. The driver slides electricity shortage avoidance priority bar 38a, SOC priority bar 38b, and time priority bar 38c to adjust the contribution degrees of a, b, and c of the low temperature score, the SOC score, and the distance score. In the example illustrated in Fig. 9, when one bar is slid, the remaining two bars are automatically adjusted so that the total score of the three bars is 150.

In the example described above, three parameters of the number of passes through the low temperature area, the predicted SOC of battery pack 41 at the time of arrival at the destination, and the distance to the destination are used as parameters for calculating the priority of the travel route. In this regard, the types of parameters are not limited to these, and the number of parameters to be used is not limited to three. For example, two parameters of the number of passes through the low temperature area and the distance to the destination may be used, or two parameters of the number of passes through the low temperature area and the predicted SOC of battery pack 41 at the time of arrival at the destination may be used.

For example, a height difference of the travel route may be used as a parameter. In this case, a score closer to 1 is assigned as the height difference is smaller. The height difference of the travel route can be acquired from map information server 6.

Further, for example, traffic congestion prediction information on the travel route may be used as a parameter. In this case, a score closer to 1 is assigned as a traffic congestion prediction distance is closer to 0 km. When the traffic congestion prediction information is used as a parameter, road traffic information acquisition unit 119 acquires traffic congestion prediction information on the travel route from road traffic information server 8.

In addition, for example, toll information of a toll road (mainly an expressway) on the travel route may be used as a parameter. In the case of the delivery company that has a policy of preferentially using the toll road, a score closer to 1 is assigned as the ratio of the distance of the toll road to the distance of the entire travel route is higher. Note that a score closer to 1 may be assigned as the toll road fee is higher. In the case of the delivery company that has a policy of using the toll road as little as possible, a score closer to 1 is assigned as the toll road fee is closer to 0 yen. When the toll information on the toll road is used as a parameter, road traffic information acquisition unit 119 acquires the toll information on the toll road on the travel route from road traffic information server 8.

When map information server 6 and road traffic information server 8 cooperate with each other through data linkage, the traffic congestion prediction information and the toll information on the toll road can also be acquired from map information server 6. Map information server 6 can calculate the predicted arrival time of the destination in consideration of the traffic congestion prediction information and use of an expressway.

SOC prediction unit 118 may model a charge and discharge pattern of battery pack 41 based on height difference information on the travel route, and may correct the predicted SOC at the time of arrival at the destination calculated without considering the height difference based on the modeled charge and discharge pattern. In addition, SOC prediction unit 118 may model the charge and discharge pattern of battery pack 41 based on the traffic congestion prediction information on the travel route, and may correct the predicted SOC at the time of arrival at the destination calculated without considering the traffic congestion prediction information based on the modeled charge and discharge pattern. In addition, in the case of using an expressway, SOC prediction unit 118 may model the charge and discharge pattern of battery pack 41 when the expressway is used, and correct the predicted SOC at the time of arrival at the destination calculated assuming that the expressway is not used based on the modeled charge and discharge pattern.

Alternatively, only the number of passes through the low temperature area may be used as a parameter for calculating the priority of the travel route. In this case, it is not necessary to predict the SOC at the time of arrival at the destination. In this case, route guidance information generation unit 116 can reliably recommend a travel route with few low temperature areas. Note that, since the present exemplary embodiment gives importance to the avoidance of the low temperature area, it is desirable that contribution degree a of the low temperature score is set to 0.5 or more even when the plurality of parameters is used.

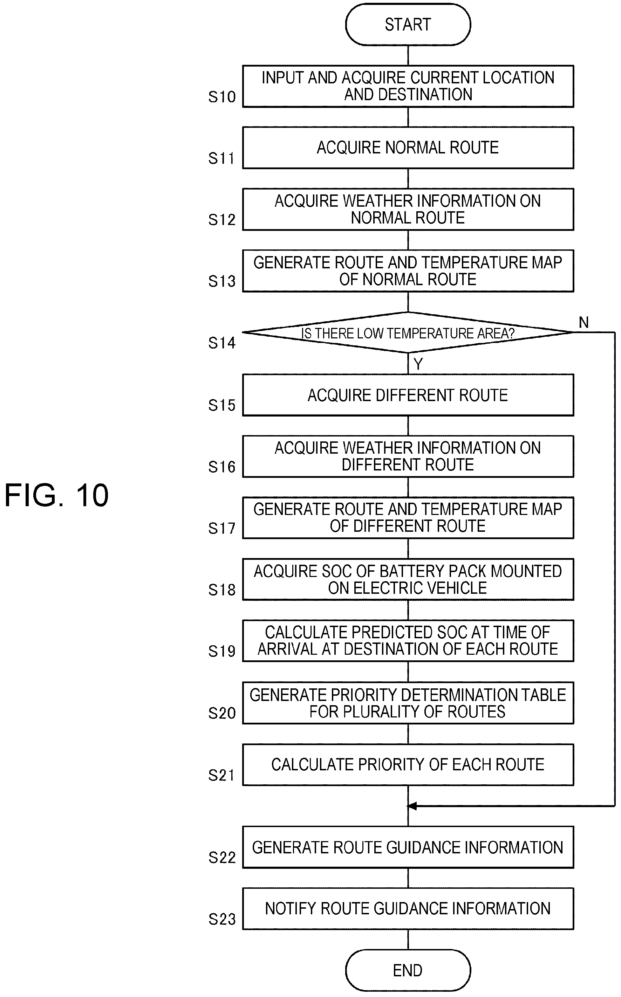

Fig. 10 is a flowchart illustrating an example of route guidance information generation processing by guidance system 1 according to the exemplary embodiment. Travel route acquisition unit 111 inputs the current location and the destination acquired from vehicle controller 30 or operation management terminal device 2 of electric vehicle 3 to map information server 6 (S10). Travel route acquisition unit 111 acquires the normal route from map information server 6 (S11). Weather information acquisition unit 112 acquires weather information on the normal route from weather information server 7 (S12). Route and temperature map generation unit 113 generates the route and temperature map of the normal route based on the weather information on the normal route (S13).

Low temperature area determination unit 114 determines whether the low temperature area is present on the normal route (S14). When the low temperature area is present (Y at S14), travel route acquisition unit 111 acquires a different route from map information server 6 (S15). Weather information acquisition unit 112 acquires weather information on the different route from weather information server 7 (S16). Route and temperature map generation unit 113 generates the route and temperature map of the different route based on the weather information on the different route (S17).

SOC acquisition unit 117 acquires the current SOC of battery pack 41 mounted on electric vehicle 3 (S18). SOC prediction unit 118 calculates the predicted SOC at the time of arrival at the destination of each route based on the current SOC thus acquired, the distance from the current location to the destination, and the electric cost of electric vehicle 3 (S19). Route priority determination unit 115 generates the priority determination table based on the route and temperature map of each travel route, the predicted SOC at the time of arrival at the destination, and the increase distance with respect to the normal route (S20). Route priority determination unit 115 calculates the priority of each travel route based on the generated priority determination table (S21).

Route guidance information generation unit 116 generates route guidance information based on the calculated priorities of the plurality of travel routes (S22). Route guidance information generation unit 116 notifies vehicle controller 30 of electric vehicle 3 or operation management terminal device 2 of the generated route guidance information (S23).

In step S14, when the low temperature area is not present on the normal route (N at S14), steps S15 to S21 are skipped, and the normal route becomes the recommended route as it is.

If charging is necessary for electric vehicle 3 to reach the destination, guidance system 1 can generate charging guidance for the travel route determined by the user.

Charger priority determination unit 1110 acquires information on an installation location of a charger installed on the determined travel route from map information server 6 or a different information server. Weather information acquisition unit 112 acquires, from weather information server 7, predicted temperatures at predicted arrival times at installation locations of a plurality of the chargers on the determined travel route. Charger priority determination unit 1110 determines priorities of the plurality of chargers based on the predicted temperatures at the predicted arrival times at the installation locations of the plurality of chargers on the determined travel route.

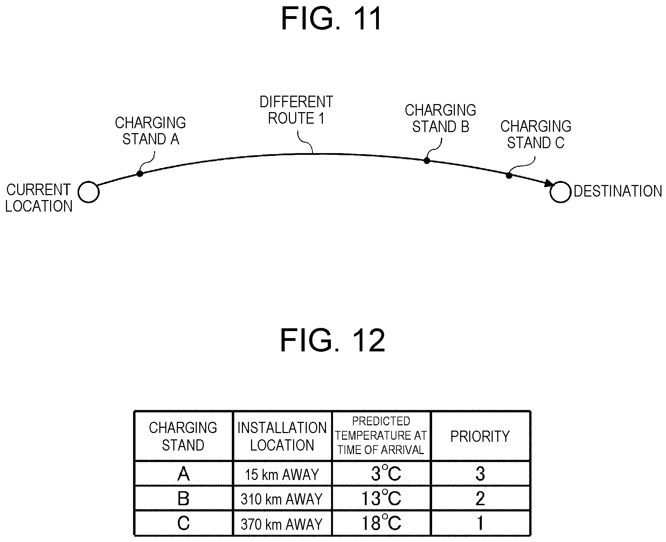

Fig. 11 is a diagram illustrating an example of charging stands installed on different route 1 determined by the user. Three charging stands A, B, and C are installed on different route 1. Fig. 12 is a diagram illustrating an example of the priority determination table for charging stands A, B, and C. Charger priority determination unit 1110 gives a higher priority to the charging stand having a higher predicted temperature at the time of predicted arrival at the installation location. In the example illustrated in Fig. 12, the predicted temperature at the time of predicted arrival at charging stand A is 3 °C, the predicted temperature at the time of predicted arrival at charging stand B is 13 °C, and the predicted temperature at the time of predicted arrival at charging stand C is 18 °C. Therefore, the priority becomes higher in order of charging stand C, charging stand B, and charging stand A.

SOC prediction unit 118 calculates the predicted SOC at the time of arrival at the installation location of each charger based on the current SOC acquired from vehicle controller 30 of electric vehicle 3, the distance from the current location to the installation location of each charger, and the electric cost of electric vehicle 3 that has been acquired. Charging plan generation unit 1111 generates a charging plan based on the predicted SOC of battery pack 41 at the time of arrival at the installation location of each charger and the predicted SOC of battery pack 41 at the time of arrival at the destination.

Based on the current SOC, charging plan generation unit 1111 determines whether electric vehicle 3 can travel to the installation location of the charger with the highest priority. If the vehicle can travel, charging plan generation unit 1111 generates a charging plan that recommends the charging with the charger with the highest priority (In Figs. 11 and 12, charging stand C). Charging plan generation unit 1111 calculates the SOC necessary for traveling from the installation location of the charger with the highest priority (hereinafter referred to as a highest priority charger) to the destination based on the distance from the installation location of the highest priority charger to the destination.

Charging plan generation unit 1111 adds, to the lower limit SOC (for example, it is set to a value within a range of 10% to 30%) set for battery pack 41, the SOC necessary for traveling to the destination and calculates a target SOC on the charging with the highest priority charger. Charging plan generation unit 1111 calculates the charging time in the highest priority charger based on the SOC at the time of arrival at the installation location of the highest priority charger, the target SOC, and the charging rate of the highest priority charger.

In a case where the vehicle cannot travel to the installation location of the highest priority charger, charging plan generation unit 1111 determines whether the vehicle can travel to the installation location of the charger having the next highest priority. If the vehicle can travel, processing similar to the above-described processing is executed. In a case where the vehicle cannot travel to the installation location of the charger having the next highest priority, charging plan generation unit 1111 determines whether the vehicle can travel to the installation location of the charger having after next highest priority. If the vehicle can travel, processing similar to the above-described processing is executed.

Charging plan generation unit 1111 adds, to the lower limit SOC set for battery pack 41, the SOC necessary for traveling from the installation location of the charger having the second or subsequent priority (hereinafter referred to as a first use charger) determined as a first charging location to the installation location of the highest priority charger, and calculates the target SOC on the charging with the first use charger. Charging plan generation unit 1111 calculates the charging time in the first use charger based on the SOC at the time of arrival at the installation location of the first use charger, the target SOC, and the charging rate of the first use charger.

In a case where the vehicle cannot reach the destination even if battery pack 41 is fully charged with the highest priority charger, charging plan generation unit 1111 determines a charger with the highest priority as a second use charger, among the chargers located after the installation location of the highest priority charger and before the destination. Note that, in a case where the break time of the driver such as a lunch break and the predicted arrival time at the installation location of a certain charger overlap, charging plan generation unit 1111 may correct so as to increase the priority of the charger.

Charging guidance information generation unit 1112 generates charging guidance information based on the charging plan generated by charging plan generation unit 1111. Charging guidance information generation unit 1112 notifies vehicle controller 30 of electric vehicle 3 of the generated charging guidance information via network 5. Vehicle controller 30 of electric vehicle 3 causes display 38 to display the charging guidance information acquired from guidance system 1. For example, in the examples illustrated in Figs. 11 and 12, display 38 displays a message such as "Charge normally at charging stand B for 20 minutes. Then, charge normally at charging stand C for 45 minutes." is displayed.

Incidentally, the travel data including the voltages, currents, temperatures, SOCs, and SOHs of battery pack 41 received by guidance system 1 from vehicle controller 30 of electric vehicle 3 is accumulated in travel data holding unit 121. SOC correction unit 1113 can correct the current SOC acquired from vehicle controller 30 of electric vehicle 3 based on the historical data of the SOC accumulated in travel data holding unit 121.

For example, in a region where an SOC-open circuit voltage (OCV) characteristic is flat, an accuracy of the SOC estimated by the OCV method is low. When a deviation between a statistical voltage corresponding to the current SOC calculated by averaging the plurality of historical data of the SOC and the voltage when the vehicle stops, and a current voltage corresponding to the current SOC is large, SOC correction unit 1113 brings the current SOC close to a SOC corresponding to the statistical voltage.

As described above, in the present exemplary embodiment, the predicted temperature at the time of passing through each waypoint on the travel route is acquired, the different route is searched for when the low temperature area is present, and each route that has been found by the searching is prioritized using the parameters such as the number of passes through the low temperature area, the SOC at the time of arrival at the destination, and the distance to the destination. As a result, it is possible to prevent unexpected decrease in SOC and electricity shortage due to passing through the low temperature area. In addition, the charging plan is generated based on the position of the charger on the travel route, and the predicted temperature and the predicted SOC at the time of arrival at the charger. As a result, it is possible to prevent charging under a low temperature and to prevent delayed delivery due to an increase in charging time.

Since the recommended route for avoiding the low temperature and an optimal charging plan can be presented to the operation manager and the driver before departure, it is possible to prevent unexpected decrease in SOC and electricity shortage, and to realize efficient operation management. The driver can concentrate on delivery and driving at ease.

It is also conceivable to use a temperature control system for controlling the battery temperature in order to suppress a decrease in the battery capacity and a decrease in the charging speed in the low temperature state. However, it is difficult to rapidly heat or cool the battery temperature using a heater, a fan, a cooler, and the like. In the present exemplary embodiment, it is possible to suppress the decrease in battery capacity and the decrease in charging speed in the low temperature state without mounting the temperature control system on power supply system 40. Therefore, cost reduction can be achieved by not mounting the temperature control system.

In addition, even in power supply system 40 in which the temperature control system is mounted, a change in battery temperature due to heating is reflected in the low temperature score, and an increase in power consumption due to heater operation is reflected in the SOC score. Therefore, guidance system 1 according to the present exemplary embodiment can be used as it is. By using guidance system 1 according to the present exemplary embodiment and the temperature control system in combination, power consumption of the temperature control system can be suppressed.

The present disclosure has been described above based on the exemplary embodiment. It is to be understood by the person of ordinary skill in the art that the exemplary embodiment is an example, that combinations of its configuration elements and processing processes can have various modified examples, and that such modified examples are also within the scope of the present disclosure.

In the above-described exemplary embodiment, an example has been described in which guidance system 1 is constructed on the own server set in the data center or the own facility, or constructed on the cloud server. In this regard, guidance system 1 may be incorporated in vehicle controller 30 of electric vehicle 3. In this case, vehicle controller 30 may acquire the travel route from map information server 6 via network 5, or may acquire the travel route from the car navigation system in cooperation with the car navigation system in electric vehicle 3. In addition, guidance system 1 may be implemented in operation management terminal device 2.

In the above-described exemplary embodiment, the description has been made by taking the case where power supply system 40 includes battery pack 41. In this regard, a capacitor pack including a plurality of electric double layer capacitor cell and a lithium ion capacitor cell may be provided. In the present description, a battery pack and a capacitor pack are collectively called a power storage pack.

In the above-described exemplary embodiment, a four-wheeled electric vehicle is assumed as electric vehicle 3. In this regard, electric vehicle 3 may be an electric motorcycle (electric scooter) or an electric bicycle. In addition, the electric vehicles include not only full-standard electric vehicles but also low-speed electric vehicles such as golf carts and land cars used in shopping malls and entertainment facilities.

REFERENCE MARKS IN THE DRAWINGS

1: guidance system
2: operation management terminal device
3: electric vehicle
5: network
6: map information server
7: weather information server

8: road traffic information server
11: processor
111: travel route acquisition unit
112: weather information acquisition unit
113: route and temperature map generation unit
114: low temperature area determination unit
115: route priority determination unit
116: route guidance information generation unit
117: SOC acquisition unit
118: SOC prediction unit
119: road traffic information acquisition unit
1110: charger priority determination unit
1111: charging plan generation unit
1112: charging guidance information generation unit
1113: SOC correction unit
12: storage unit
121: travel data holding unit
13: communication unit
30: vehicle controller
31f: front wheel
31r: rear wheel
32f: front wheel axle
32r: rear wheel axle
33: transmission
34: motor
35: inverter
361: GPS sensor
362: vehicle speed sensor
37: wireless communication unit
37a: antenna
38: display
40: power supply system
41: battery pack
42: management unit

**Claims**

1. A guidance system (1) comprising:

   a travel route acquisition unit (111) configured to acquire a travel route of an electric vehicle (3);
   a weather information acquisition unit (112) configured to acquire weather information on the travel route; and
   a route guidance information generation unit (116) configured to generate route guidance information based on the travel route thus acquired and the weather information thus acquired,
   wherein, when one or more low temperature areas each including a temperature of the weather information lower than a threshold value is present on the travel route, the travel route acquisition unit (111) further acquires one or more different travel routes different from the travel route, and the route guidance information generation unit (116) generates route guidance information that recommends a travel route for avoiding the one or more low temperature areas among the travel route and the one or more different travel routes,
   wherein the guidance system (1) further comprises:

   an SOC acquisition unit (117) configured to acquire a current state of charge of a power storage unit (41) mounted on the electric vehicle (3);
   an SOC prediction unit (118) configured to predict a predicted state of charge of the power storage unit (41) at a time of arrival at a destination based on the current state of charge of the power storage unit (41) thus acquired, an electric cost of the electric vehicle (3), and a distance to the destination; and **characterized in that** the guidance system (1) further comprises
   a route priority determination unit (115) configured to determine priorities of plurality of travel routes, the plurality of travel routes including the travel route and the one or more different travel routes,

wherein the route priority determination unit (115) determines, for each of the plurality of travel routes, priorities of the plurality of travel routes based on a number of passes through the one or more low temperature areas, the predicted state of charge of the power storage unit at the time of arrival at the destination, and the distance to the destination, wherein the route priority determination (115) unit scores, for each of the plurality of travel routes, the number of passes through the one or more low temperature areas, the predicted state of charge of the power storage unit (41) at the time of arrival at the destination, and the distance to the destination, and calculates the priority of each travel route by weighted averaging the scores of the number of passes, the predicted state of charge, and the distance

2. The guidance system according to Claim 1, wherein the route priority determination unit (115) changes contribution degrees of the number of passes through the one or more low temperature areas, the predicted state of charge of the power storage unit (41) at the time of arrival at the destination, and the distance to the destination, based on information input by a user.

3. The guidance system according to any one of Claims 1 to 2, wherein the SOC prediction unit (118) corrects , for each of the plurality of travel routes, the predicted state of charge of the power storage unit (41) at the time of arrival at the destination according to at least one of height difference information, traffic congestion prediction information, and use or non-use of an expressway.

4. The guidance system according to any one of Claims 1 to 3 further comprising:

   a charger priority determination unit (1110) configured to determine priorities of a plurality of chargers based on predicted temperatures of predicted arrival times at installation locations of the plurality of chargers on a travel route determined by the user; and
   a charging guidance information generation unit (1112) configured to generate charging guidance information based on priorities of the plurality of chargers,
   wherein the charger priority determination unit (1110) sets a higher priority to a charger among the plurality of chargers with a higher predicted temperature of a predicted arrival time at an installation location.

5. The guidance system according to Claim 4, further comprising a charging plan generation unit (1111) configured to generate a charging plan based on a predicted state of charge of the power storage unit (41) at the time of arrival at the installation location of each of the plurality of chargers and a predicted state of charge of the power storage unit (41) at the time of arrival at the destination.

6. The guidance system (1) according to any one of Claims 1 to 5, being configured in a server on a cloud, the guidance system (1) further comprising a communication unit (13) configured to receive various data from a controller (30) of the electric vehicle (3) via a network and transmit route guidance information generated by the route guidance information generation unit (116) to the controller (30) of the electric vehicle (3) via the network.

7. The guidance system (1) according to Claim 6, further comprising:

   a travel data holding unit (121) configured to accumulate travel data including a state of charge of the power storage unit (41) received from the controller (30) of the electric vehicle (3); and
   an SOC correction unit (1113) configured to correct a current state of charge of the power storage unit (41) received from the controller (30) of the electric vehicle (3) based on historical data of the state of charge accumulated in the travel data holding unit (121).

8. A guidance method comprising:

   acquiring a travel route of an electric vehicle (3);
   acquiring weather information on the travel route; and
   generating route guidance information based on the travel route thus acquired and the weather information thus acquired,
   wherein, when one or more low temperature areas each including a temperature of the weather information lower than a threshold value is present on the travel route, during the acquiring the travel route, further acquiring one or more different travel routes different from the travel route, and during the generating the route guidance information, generating route guidance information that recommends a travel route for avoiding the one or more low temperature areas among the travel route and the one or more different travel routes,
acquiring a current state of charge of a power storage unit (41) mounted on the electric vehicle (3);
predicting a predicted state of charge of the power storage unit (41) at a time of arrival at a destination based on the current state of charge of the power storage unit (41) thus acquired, an electric cost of the electric vehicle (3), and a distance to the destination;
determining priorities of plurality of travel routes, the plurality of travel routes including the travel route and the one or more different travel routes, and **characterized in that** the method further comprises
determining, for each of the plurality of travel routes, priorities of the plurality of travel routes based on a number of passes through the one or more low temperature areas, the predicted state of charge of the power storage unit at the time of arrival at the destination, and the distance to the destination; scoring, for each of the plurality of travel routes, the number of passes through the one or more low temperature areas, the predicted state of charge of the power storage unit (41) at the time of arrival at the destination, and the distance to the destination; and calculating the priority of each travel route by weighted averaging the scores of the number of passes, the predicted state of charge, and the distance.

9. A non-transitory machine-readable recording medium that stores a guidance program causing a computer to perform the guidance method of claim 8.


**Patentansprüche**

1. Führungssystem (1), das Folgendes umfasst:

eine Fahrtroutenerfassungseinheit (111), die dazu ausgelegt ist, eine Fahrtroute eines Elektrofahrzeugs (3) zu erfassen;
eine Wetterinformationenerfassungseinheit (112), die dazu ausgelegt ist, Wetterinformationen auf der Fahrtroute zu erfassen; und
eine Routenführungsinformationserzeugungseinheit (116), die dazu ausgelegt ist, auf Basis der so erfassten Fahrtroute und der so erfassten Wetterinformationen Routenführungsinformationen zu erzeugen,
wobei, wenn auf der Fahrtroute ein oder mehrere Niedrigtemperaturbereiche vorhanden sind, die eine Temperatur der Wetterinformationen beinhalten, die niedriger ist als ein Schwellwert, die Fahrtroutenerfassungseinheit (111) ferner eine oder mehrere andere Fahrtrouten erfasst, die sich von der Fahrtroute unterscheiden, und die Routenführungsinformationserzeugungseinheit (116) Routenführungsinformationen erzeugt, die eine Fahrtroute zum Vermeiden des einen oder der mehreren Niedrigtemperaturbereiche der Fahrtroute und der einen oder der mehreren anderen Fahrtrouten empfehlen, wobei das Führungssystem (1) ferner Folgendes umfasst:

eine SOC-Erfassungseinheit (117), die dazu ausgelegt ist, einen aktuellen Ladezustand einer Energiespeichereinheit (41) zu erfassen, die im Elektrofahrzeug (3) montiert ist;
eine SOC-Vorhersageeinheit (118), die dazu ausgelegt ist, einen vorhergesagten Ladezustand der Energiespeichereinheit (41) zu einer Ankunftszeit an einem Ziel auf Basis des so erfassten aktuellen Ladezustands der Energiespeichereinheit (41), von Elektrokosten des Elektrofahrzeugs (3) und eines Abstands vom Ziel vorherzusagen; und **dadurch gekennzeichnet, dass** das Führungssystem (1) ferner Folgendes umfasst
eine Routenprioritätsbestimmungseinheit (115), die dazu ausgelegt ist, Prioritäten einer Vielzahl von Fahrtrouten zu bestimmen, wobei die Vielzahl von Fahrtrouten die Fahrtroute und die eine oder die mehreren anderen Fahrtrouten beinhalten,
wobei die Routenprioritätsbestimmungseinheit (115) für jede der Vielzahl von Fahrtrouten Prioritäten der Vielzahl von Fahrtrouten auf Basis einer Anzahl von Durchquerungen des einen oder der mehreren Niedrigtemperaturbereiche, des vorhergesagten Ladezustands der Energiespeichereinheit zur Ankunftszeit am Ziel und des Abstands vom Ziel bestimmt, wobei die Routenprioritätsbestimmungseinheit (115) für jede der Vielzahl von Fahrtrouten die Anzahl von Durchquerungen des einen oder der mehreren Niedrigtemperaturbereiche, den vorhergesagten Ladezustand der Energiespeichereinheit (41) zur Ankunftszeit am Ziel und den Abstand vom Ziel bewertet und die Priorität von jeder Fahrtroute durch ein gewichtetes Mitteln der Bewertungen der Anzahl von Durchquerungen, des vorhergesagten Ladezustands und des Abstands berechnet.

2. Führungssystem nach Anspruch 1, wobei die Routenprioritätsbestimmungseinheit (115) Beitragsgrade der Anzahl von Durchquerungen des einen oder der mehreren Niedrigtemperaturbereiche, des vorhergesagten Ladezustands der Energiespeichereinheit (41) zur Ankunftszeit am Ziel und des Abstands vom Ziel auf Basis von Informationen ändert, die von einem Benutzer eingegeben werden.

3. Führungssystem nach einem der Ansprüche 1 bis 2, wobei die SOC-Vorhersageeinheit (118) für jede der Vielzahl von Fahrtrouten den vorhergesagten Ladezustand der Energiespeichereinheit (41) zur Ankunftszeit am Ziel gemäß mindestens einem von Höhendifferenzinformationen, Verkehrsstauvorhersageinformationen und einer Verwendung oder Nichtverwendung einer Schnellstraße korrigiert.

4. Führungssystem nach einem der Ansprüche 1 bis 3, das ferner Folgendes umfasst:

eine Ladegerätsprioritätsbestimmungseinheit (1110), die dazu ausgelegt ist, Prioritäten einer Vielzahl von Ladegeräten auf Basis von vorhergesagten Temperaturen zu vorhergesagten Ankunftszeiten an Installationsorten der Vielzahl von Ladegeräten auf einer Fahrtroute zu bestimmen, die vom Benutzer bestimmt wird; und eine Ladungsführungsinformationserzeugungseinheit (1112), die dazu ausgelegt ist, Ladungsführungsinformationen auf Basis von Prioritäten der Vielzahl von Ladegeräten zu erzeugen, wobei die Ladegerätsprioritätsbestimmungseinheit (1110) für ein Ladegerät unter der Vielzahl von Ladegeräten mit einer höheren vorhergesagten Temperatur einer vorhergesagten Ankunftszeit an einem Installationsort eine höhere Priorität einstellt.

5. Führungssystem nach Anspruch 4, das ferner eine Ladeplanerzeugungseinheit (1111) umfasst, die dazu ausgelegt ist, auf Basis eines vorhergesagten Ladezustands der Energiespeichereinheit (41) zur Ankunftszeit am Installationsort von jedem der Vielzahl von Ladegeräten und eines vorhergesagten Ladezustands der Energiespeichereinheit (41) zur Ankunftszeit am Ziel einen Ladeplan zu erzeugen.

6. Führungssystem (1) nach einem der Ansprüche 1 bis 5, das auf einem Server oder in einer Cloud ausgelegt ist, wobei das Führungssystem (1) ferner eine Kommunikationseinheit (13) umfasst, die dazu ausgelegt ist, verschiedene Daten von einer Steuerung (30) des Elektrofahrzeugs (3) via ein Netzwerk zu empfangen und Routenführungsinformationen, die von der Routenführungsinformationserzeugungseinheit (116) erzeugt werden, via das Netzwerk zur Steuerung (30) des Elektrofahrzeugs (3) zu übertragen.

7. Führungssystem (1) nach Anspruch 6, das ferner Folgendes umfasst:

eine Fahrdatenaufnahmeeinheit (121), die dazu ausgelegt ist, Fahrdaten, die einen Ladezustand der Energiespeichereinheit (41) beinhalten, der von der Steuerung (30) des Elektrofahrzeugs (3) empfangen wird, zu akkumulieren; und eine SOC-Korrektureinheit (1113), die dazu ausgelegt ist, einen aktuellen Ladezustand der Energiespeichereinheit (41), der von der Steuerung (30) des Elektrofahrzeugs (3) empfangen wird, auf Basis von Verlaufsdaten des Ladezustands, die in der Fahrdatenaufnahmeeinheit (121) akkumuliert sind, zu korrigieren.

8. Führungsverfahren, das Folgendes umfasst:

Erfassen einer Fahrtroute eines Elektrofahrzeugs (3);
Erfassen von Wetterinformationen auf der Fahrtroute; und
Erzeugen von Routenführungsinformationen auf Basis der so erfassten Fahrtroute und der so erfassten Wetterinformationen,
wobei, wenn auf der Fahrtroute ein oder mehrere Niedrigtemperaturbereiche vorhanden sind, die eine Temperatur der Wetterinformationen beinhalten, die niedriger ist als ein Schwellwert, während des Erfassens der Fahrtroute weiteres Erfassen von einer oder mehreren anderen Fahrtrouten, die sich von der Fahrtroute unterscheiden, und während des Erzeugens der Routenführungsinformationen Erzeugen von Routenführungsinformationen, die eine Fahrtroute zum Vermeiden des einen oder der mehreren Niedrigtemperaturbereiche der Fahrtroute und der einen oder den mehreren anderen Fahrtrouten empfehlen,
Erfassen eines aktuellen Ladezustands einer Energiespeichereinheit (41), die im Elektrofahrzeug (3) montiert ist;
Vorhersagen eines vorhergesagten Ladezustands der Energiespeichereinheit (41) zu einer Ankunftszeit an einem Ziel auf Basis des so erfassten aktuellen Ladezustands der Energiespeichereinheit (41), von Elektrokosten des Elektrofahrzeugs (3) und eines Abstands vom Ziel;
Bestimmen von Prioritäten einer Vielzahl von Fahrtrouten, wobei die Vielzahl von Fahrtrouten die Fahrtroute und die eine oder die mehreren anderen Fahrtrouten beinhalten, und **dadurch gekennzeichnet, dass** das Verfahren ferner Folgendes umfasst

Bestimmen von Prioritäten der Vielzahl von Fahrtrouten für jede der Vielzahl von Fahrtrouten auf Basis einer Anzahl von Durchquerungen des einen oder der mehreren Niedrigtemperaturbereiche, des vorhergesagten Ladezustands der Energiespeichereinheit zur Ankunftszeit am Ziel und des Abstands vom Ziel;

Bewerten der Anzahl von Durchquerungen des einen oder der mehreren Niedrigtemperaturbereiche, des vorhergesagten Ladezustands der Energiespeichereinheit (41) zur Ankunftszeit am Ziel und des Abstands vom Ziel für jede der Vielzahl von Fahrtrouten;

und Berechnen der Priorität von jeder Fahrtroute durch gewichtetes Mitteln der Bewertungen der Anzahl von Durchquerungen, des vorhergesagten Ladezustands und des Abstands.

9. Nichttransitorisches maschinenlesbares Aufzeichnungsmedium, auf dem ein Führungsprogramm gespeichert ist, das einen Computer veranlasst, das Führungsverfahren von Anspruch 8 durchzuführen.

## Revendications

1. Système de guidage (1) comprenant :

une unité d'acquisition d'itinéraire de déplacement (111) configurée pour acquérir un itinéraire de déplacement d'un véhicule électrique (3) ;

une unité d'acquisition d'informations météorologiques (112) configurée pour acquérir des informations météorologiques sur l'itinéraire de déplacement ; et

une unité de génération d'informations de guidage d'itinéraire (116) configurée pour générer des informations de guidage d'itinéraire sur la base de l'itinéraire de déplacement ainsi acquis et des informations météorologiques ainsi acquises,

dans lequel, lorsqu'une ou plusieurs zones de basse température, comportant chacune une température dans les informations météorologiques qui est inférieure à une valeur seuil, sont présentes sur l'itinéraire de déplacement, l'unité d'acquisition d'itinéraire de déplacement (111) acquiert en outre un ou plusieurs itinéraires de déplacement différents qui sont différents de l'itinéraire de déplacement, et l'unité de génération d'informations de guidage d'itinéraire (116) génère des informations de guidage d'itinéraire qui recommandent un itinéraire de déplacement permettant d'éviter les une ou plusieurs zones de basse température parmi l'itinéraire de déplacement et les un ou plusieurs itinéraires de déplacement différents,

dans lequel le système de guidage (1) comprend en outre :

une unité d'acquisition SOC (117) configurée pour acquérir un état de charge actuel d'une unité de stockage de puissance (41) montée sur le véhicule électrique (3) ;

une unité de prédiction SOC (118) configurée pour prédire un état de charge prédit de l'unité de stockage de puissance (41) à un temps d'arrivée à une destination sur la base de l'état de charge actuel de l'unité de stockage de puissance (41) ainsi acquis, d'un coût électrique du véhicule électrique (3) et d'une distance par rapport à la destination ; et **caractérisé en ce que** le système de guidage (1) comprend en outre

une unité de détermination de priorité d'itinéraire (115) configurée pour déterminer les priorités d'une pluralité d'itinéraires de déplacement, la pluralité d'itinéraires de déplacement comportant l'itinéraire de déplacement et les un ou plusieurs itinéraires de déplacement différents,

dans lequel l'unité de détermination de priorité d'itinéraire (115) détermine pour chacun de la pluralité d'itinéraires de déplacement les priorités de la pluralité d'itinéraires de déplacement sur la base d'un nombre de passages par les une ou plusieurs zones de basse température, de l'état de charge prédit de l'unité de stockage de puissance au temps de l'arrivée à la destination et de la distance par rapport à la destination, dans lequel l'unité de détermination de priorité d'itinéraire (115) attribue des scores à chacun parmi la pluralité d'itinéraires de déplacement, le nombre de passages par les une ou plusieurs zones de basse température, l'état de charge prédit de l'unité de stockage de puissance (41) au temps de l'arrivée à la destination et la distance par rapport à la destination, et calcule la priorité de chaque itinéraire de déplacement par un moyennage pondéré des scores du nombre de passages, de l'état de charge prédit et de la distance.

2. Système de guidage selon la revendication 1, dans lequel l'unité de détermination de priorité d'itinéraire (115) modifie les degrés de contribution du nombre de passages par les une ou plusieurs zones de basse température, de l'état de charge prédit de l'unité de stockage de puissance (41) au temps de l'arrivée à la destination et de la distance par rapport à la destination, sur la base d'informations entrées par un utilisateur.

**3.** Système de guidage selon l'une des revendications 1 et 2, dans lequel l'unité de prédiction SOC (118) corrige pour chacun de la pluralité d'itinéraires de déplacement l'état de charge prédit de l'unité de stockage de puissance (41) au temps de l'arrivée à la destination selon au moins un parmi des informations de dénivelé, des informations de prédiction d'embouteillage, et l'utilisation ou de la non-utilisation d'une voie rapide.

**4.** Système de guidage selon l'une des revendications 1 à 3 comprenant en outre :

une unité de détermination de priorité de chargeur (1110) configurée pour déterminer les priorités d'une pluralité de chargeurs sur la base de températures prédites de temps d'arrivée prédits à des emplacements d'installation de la pluralité de chargeurs sur un itinéraire de déplacement déterminé par l'utilisateur ; et
une unité de génération d'informations de guidage de charge (1112) configurée pour générer des informations de guidage de charge sur la base des priorités de la pluralité de chargeurs,
dans lequel l'unité de détermination de priorité de chargeur (1110) donne une priorité plus élevée à un chargeur de la pluralité de chargeurs avec une température prédite plus élevée d'un temps d'arrivée prédit à un emplacement d'installation.

**5.** Système de guidage selon la revendication 4, comprenant en outre une unité de génération de plan de charge (1111) configurée pour générer un plan de charge sur la base d'un état de charge prédit de l'unité de stockage de puissance (41) au temps d'arrivée à l'emplacement d'installation de chacun de la pluralité de chargeurs et d'un état de charge prédit de l'unité de stockage de puissance (41) au temps de l'arrivée à la destination.

**6.** Système de guidage (1) selon l'une des revendications 1 à 5, configuré dans un serveur sur un nuage,
le système de guidage (1) comprenant en outre une unité de communication (13) configurée pour recevoir diverses données d'un dispositif de commande (30) du véhicule électrique (3) via un réseau et transmettre des informations de guidage d'itinéraire générées par l'unité de génération d'informations de guidage d'itinéraire (116) au dispositif de commande (30) du véhicule électrique (3) via le réseau.

**7.** Système de guidage (1) selon la revendication 6, comprenant en outre :

une unité de conservation de données de déplacement (121) configurée pour cumuler des données de déplacement comportant un état de charge de l'unité de stockage de puissance (41) reçu du dispositif de commande (30) du véhicule électrique (3) ; et
une unité de correction SOC (1113) configurée pour corriger un état de charge actuel de l'unité de stockage de puissance (41) reçu du dispositif de commande (30) du véhicule électrique (3) sur la base de données historiques de l'état de charge cumulées dans l'unité de conservation de données de déplacement (121).

**8.** Procédé de guidage comprenant :

l'acquisition d'un itinéraire de déplacement d'un véhicule électrique (3) ;
l'acquisition d'informations météorologiques sur l'itinéraire de déplacement ; et
la génération d'informations de guidage d'itinéraire sur la base de l'itinéraire de déplacement ainsi acquis et des informations météorologiques ainsi acquises,
dans lequel, lorsqu'une ou plusieurs zones de basse température, comportant chacune une température dans les informations météorologiques qui est inférieure à une valeur seuil, sont présentes sur l'itinéraire de déplacement, lors de l'acquisition de l'itinéraire de déplacement, un ou plusieurs itinéraires de déplacement différents qui sont différents de l'itinéraire de déplacement sont en outre acquis, et lors de la génération des informations de guidage d'itinéraire, des informations de guidage d'itinéraire qui recommandent un itinéraire de déplacement permettant d'éviter les une ou plusieurs zones de basse température parmi l'itinéraire de déplacement et les un ou plusieurs itinéraires de déplacement différents sont générées,
l'acquisition d'un état de charge actuel d'une unité de stockage de puissance (41) montée sur le véhicule électrique (3) ;
la prédiction d'un état de charge prédit de l'unité de stockage de puissance (41) à un temps d'arrivée à une destination sur la base de l'état de charge actuel de l'unité de stockage de puissance (41) ainsi acquis, d'un coût électrique du véhicule électrique (3) et d'une distance par rapport à la destination ;
la détermination des priorités d'une pluralité d'itinéraires de déplacement, la pluralité d'itinéraires de déplacement comportant l'itinéraire de déplacement et les un ou plusieurs itinéraires de déplacement différents, et **caractérisé en ce que** le procédé comprend en outre
la détermination pour chacun de la pluralité d'itinéraires de déplacement des priorités de la pluralité d'itinéraires de déplacement sur la base d'un nombre de passages par les une ou plusieurs zones de basse température, de l'état de charge prédit de l'unité de stockage de puissance au temps de l'arrivée à la destination et de la distance par rapport à la destination ;

l'attribution de scores à chacun parmi la pluralité d'itinéraires de déplacement, le nombre de passages par les une ou plusieurs zones de basse température, l'état de charge prédit de l'unité de stockage de puissance (41) au temps de l'arrivée à la destination et la distance par rapport à la destination ;

et le calcul de la priorité de chaque itinéraire de déplacement par un moyennage pondéré des scores du nombre de passages, de l'état de charge prédit et de la distance.

9. Support d'enregistrement non transitoire lisible par une machine qui stocke un programme de guidage amenant un ordinateur à effectuer le procédé de guidage de la revendication 8.

FIG. 1

# FIG. 2

# FIG. 3

5

1

13

COMMUNICATION UNIT

11

| 111 | 112 | 113 |
|---|---|---|
| TRAVEL ROUTE ACQUISITION UNIT | WEATHER INFORMATION ACQUISITION UNIT | ROUTE AND TEMPERATURE MAP GENERATION UNIT |

| 114 | 115 | 116 |
|---|---|---|
| LOW TEMPERATURE AREA DETERMINATION UNIT | ROUTE PRIORITY DETERMINATION UNIT | ROUTE GUIDANCE INFORMATION GENERATION UNIT |

| 117 | 118 | 119 |
|---|---|---|
| SOC ACQUISITION UNIT | SOC PREDICTION UNIT | ROAD TRAFFIC INFORMATION ACQUISITION UNIT |

| 1110 | 1111 | 1112 |
|---|---|---|
| CHARGER PRIORITY DETERMINATION UNIT | CHARGING PLAN GENERATION UNIT | CHARGING GUIDANCE INFORMATION GENERATION UNIT |

1113

SOC CORRECTION UNIT

PROCESSOR

12

121

TRAVEL DATA HOLDING UNIT

STORAGE UNIT

GUIDANCE SYSTEM

# FIG. 4

# FIG. 5A

| NUMBER OF PASSES THROUGH LOW TEMPERATURE AREA | LOW TEMPERATURE SCORE |
|---|---|
| 0 | 1 |
| 1 | 0.75 |
| 2 | 0.5 |
| 3 | 0.25 |
| 4~ | 0 |

# FIG. 5B

| SOC AT TIME OF ARRIVAL [%] | SOC SCORE |
|---|---|
| 75~100 | 1 |
| 50~75 | 0.8 |
| 30~50 | 0.6 |
| 20~30 | 0.4 |
| 10~20 | 0.1 |
| 0~10 | 0 |

# FIG. 5C

| INCREASE DISTANCE [km] | DISTANCE SCORE |
|---|---|
| ~5 | 1 |
| 5~20 | 0.8 |
| 20~40 | 0.6 |
| 40~60 | 0.4 |
| 60~80 | 0.2 |
| 80~ | 0 |

# FIG. 6

| WAYPOINT | PREDICTED PASSING THROUGH TIME | PREDICTED TEMPERATURE AT TIME OF PASSING THROUGH | LOW TEMPERATURE DETERMINATION | NUMBER OF PASSES THROUGH LOW TEMPERATURE AREA |
|---|---|---|---|---|
| A | 13:40 | 20°C | ◯ | |
| B | 15:30 | 5°C | ✕ | 2 |
| C | 17:45 | 8°C | ✕ | |

# FIG. 7

| ROUTE | WAYPOINT | PREDICTED PASSING THROUGH TIME | PREDICTED TEMPERATURE AT TIME OF PASSING THROUGH | LOW TEMPERATURE DETERMINATION | NUMBER OF PASSES THROUGH LOW TEMPERATURE AREA | SOC AT TIME OF ARRIVAL | INCREASE DISTANCE | PRIORITY |
|---|---|---|---|---|---|---|---|---|
| NORMAL ROUTE | A | 13:40 | 20°C | ◯ | 2 | 15% | 0 | C |
| | B | 15:30 | 5°C | ✕ | | | | |
| | C | 17:45 | 8°C | ✕ | | | | |
| | DESTINATION | 19:00 | 16°C | ◯ | | | | |
| DIFFERENT ROUTE 1 | D | 13:40 | 20°C | ◯ | 1 | 25% | 20km | A |
| | E | 15:50 | 18°C | ◯ | | | | |
| | F | 18:15 | 9°C | ✕ | | | | |
| | DESTINATION | 19:30 | 16°C | ◯ | | | | |
| DIFFERENT ROUTE 2 | G | 13:15 | 20°C | ◯ | 1 | 20% | 50km | B |
| | H | 15:00 | 18°C | ◯ | | | | |
| | I | 17:50 | 10°C | ✕ | | | | |
| | DESTINATION | 19:45 | 16°C | ◯ | | | | |

# FIG. 8

38

## ROUTE GUIDANCE

THERE ARE TWO CANDIDATES FOR DIFFERENT ROUTES.
DIFFERENT ROUTE 1 IS RECOMMENDED.

NORMAL ROUTE: TOTAL TRAVEL DISTANCE 430 km,
PREDICTED SOC AT TIME OF ARRIVAL 15%
ARRIVAL TIME 19:00,
MINIMUM TEMPERATURE ON ROUTE: 5°C

DIFFERENT ROUTE 1: TOTAL TRAVEL DISTANCE 450 km,
PREDICTED SOC AT TIME OF ARRIVAL 25%
ARRIVAL TIME 19:30,
MINIMUM TEMPERATURE ON ROUTE: 9°C

DIFFERENT ROUTE 2: TOTAL TRAVEL DISTANCE 480 km,
PREDICTED SOC AT TIME OF ARRIVAL 20%
ARRIVAL TIME 19:45,
MINIMUM TEMPERATURE ON ROUTE: 7°C

# FIG. 9

38

## SETTING

ELECTRICITY SHORTAGE
AVOIDANCE PRIORITY

0　　　　　50　　　　100

38a

SOC PRIORITY

0　　　　　50　　　　100

38b

TIME PRIORITY

0　　　　　50　　　　100

38c

FIG. 10

```
                          ┌─────────────┐
                          │    START    │
                          └──────┬──────┘
                                 │
        ┌────────────────────────────────────────────────┐
 S10    │ INPUT AND ACQUIRE CURRENT LOCATION             │
        │ AND DESTINATION                                │
        └────────────────────┬───────────────────────────┘
                             │
        ┌────────────────────────────────────────────────┐
 S11    │         ACQUIRE NORMAL ROUTE                   │
        └────────────────────┬───────────────────────────┘
                             │
        ┌────────────────────────────────────────────────┐
 S12    │ ACQUIRE WEATHER INFORMATION ON                 │
        │ NORMAL ROUTE                                   │
        └────────────────────┬───────────────────────────┘
                             │
        ┌────────────────────────────────────────────────┐
 S13    │ GENERATE ROUTE AND TEMPERATURE MAP             │
        │ OF NORMAL ROUTE                                │
        └────────────────────┬───────────────────────────┘
                             │
 S14              ◇ IS THERE LOW TEMPERATURE AREA? ◇────── N
                             │ Y
        ┌────────────────────────────────────────────────┐
 S15    │         ACQUIRE DIFFERENT ROUTE                │
        └────────────────────┬───────────────────────────┘
                             │
        ┌────────────────────────────────────────────────┐
 S16    │ ACQUIRE WEATHER INFORMATION ON                 │
        │ DIFFERENT ROUTE                                │
        └────────────────────┬───────────────────────────┘
                             │
        ┌────────────────────────────────────────────────┐
 S17    │ GENERATE ROUTE AND TEMPERATURE MAP             │
        │ OF DIFFERENT ROUTE                             │
        └────────────────────┬───────────────────────────┘
                             │
        ┌────────────────────────────────────────────────┐
 S18    │ ACQUIRE SOC OF BATTERY PACK MOUNTED            │
        │ ON ELECTRIC VEHICLE                            │
        └────────────────────┬───────────────────────────┘
                             │
        ┌────────────────────────────────────────────────┐
 S19    │ CALCULATE PREDICTED SOC AT TIME OF             │
        │ ARRIVAL AT DESTINATION OF EACH ROUTE           │
        └────────────────────┬───────────────────────────┘
                             │
        ┌────────────────────────────────────────────────┐
 S20    │ GENERATE PRIORITY DETERMINATION TABLE          │
        │ FOR PLURALITY OF ROUTES                        │
        └────────────────────┬───────────────────────────┘
                             │
        ┌────────────────────────────────────────────────┐
 S21    │      CALCULATE PRIORITY OF EACH ROUTE          │
        └────────────────────┬───────────────────────────┘
                             │
        ┌────────────────────────────────────────────────┐
 S22    │     GENERATE ROUTE GUIDANCE INFORMATION        │
        └────────────────────┬───────────────────────────┘
                             │
        ┌────────────────────────────────────────────────┐
 S23    │     NOTIFY ROUTE GUIDANCE INFORMATION          │
        └────────────────────┬───────────────────────────┘
                             │
                          ┌──────┴──────┐
                          │     END     │
                          └─────────────┘
```

# FIG. 11

# FIG. 12

| CHARGING STAND | INSTALLATION LOCATION | PREDICTED TEMPERATURE AT TIME OF ARRIVAL | PRIORITY |
|---|---|---|---|
| A | 15 km AWAY | 3°C | 3 |
| B | 310 km AWAY | 13°C | 2 |
| C | 370 km AWAY | 18°C | 1 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10859391 B
- JP 2019168326 A

- KR 20130033546 A